# EUROPÄISCHE PATENTSCHRIFT

(11) **EP 3 118 706 B1**
(45) Veröffentlichungstag und Bekanntmachung des Hinweises auf die Patenterteilung: **28.03.2018**
(21) Anmeldenummer: 16177587.9
(22) Anmeldetag: 01.07.2016
(51) Int. Cl.: G05D 1/02, B66F 9/06, B66F 9/075

(54) **VERFAHREN ZUR STEUERUNG EINES KOMMISSIONIERFLURFÖRDERZEUGS**
METHOD FOR CONTROLLING A PICKING VEHICLE
PROCEDE DE COMMANDE D'UN CHARIOT DE MANUTENTION POUR LA PREPARATION DE COMMANDE

(30) Priorität: 17.07.2015 DE 102015111697
(43) Veröffentlichungstag der Anmeldung: 18.01.2017
(73) Patentinhaber: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Fischer, Christian, 24598 Boostedt (DE)
(74) Vertreter: Patentship Patentanwaltsgesellschaft mbH

(56) Entgegenhaltungen:
- EP-A1- 0 032 393
- EP-A2- 0 391 206
- EP-A2- 2 036 763
- WO-A1-2015/097736
- DE-A1-102013 110 456
- JP-A- H0 624 510

## Beschreibung

Die Erfindung betrifft ein Verfahren zur Steuerung eines Kommissionierflurförderzeugs. Insbesondere betrifft die Erfindung ein Verfahren zur Steuerung eines Flurförderzeugs, vor allem eines Flurförderzeugs zur Kommissionierung, wobei das Flurförderzeug zur Überwachung der Umgebung einen Sensor aufweist, der mit einer Steuerungsvorrichtung verbunden ist, und die Steuerungsvorrichtung nach einem Startbefehl das Flurförderzeug automatisch ohne Signal eines durch eine Person betätigten Fahrsignalgebers fährt, durch Auswertung der Daten des Sensors einen Überwachungsbereich erfasst, in den Daten mindestens eine Regalkante bestimmt und das Flurförderzeug in konstantem Abstand zu einer Regalkante als Führungslinie an dieser entlang fährt, wobei die Steuerungsvorrichtung beidseitig einer Längsachse des Flurförderzeugs eine Regalkante zu bestimmen sucht.

Ein gattungsgemäßes Verfahren ist aus der DE 10 2013 110 456 A1 bekannt.

Beim Kommissionieren in Lagerhäusern werden spezielle Flurförderzeuge eingesetzt, mit denen durch den Lagerbereich, beispielsweise durch Regalreihen gefahren wird, um die für eine Auslieferung bestimmten Waren zusammen zu stellen. Solche Kommissionierflurförderzeuge können dabei so ausgelegt sein, dass eine Person während des Kommissionierens mitfährt, aber auch beim Zusammenstellen der Waren und beim Fahren an einem Regal entlang zu Fuß neben dem Fahrzeug mitläuft, um Waren aus dem Regal zu entnehmen und diese auf eine Palette oder in einen Transportbehälter auf dem Flurförderzeug abzulegen.

Für die erleichterte Bedienung des Kommissionierflurförderzeugs sind dabei Fernbedienungen bekannt. Durch solche Fernbedienungen hat die kommissionierende Person, der Kommissionierer, die Möglichkeit, das Kommissionierflurförderzeug zu verlassen und dessen Fahrbewegungen mit der Fernbedienung anzusteuern. Eine bekannte Variante hierfür ist, dass der Kommissionierer durch einen Knopfdruck ein Vorwärtsfahren des Fahrzeugs anfordert, wobei das Kommissionierflurförderzeugs so lange fährt, wie der Knopf gedrückt bleibt.

Nachteilig an diesem Stand der Technik ist, dass keine Überwachung auf Hindernisse erfolgt und auch nicht gewährleistet ist, dass das Kommissionierflurförderzeug beispielsweise in einem Regalgang seine Spur einhält und genau in der Richtung des Ganges fährt. Hierzu müsste die bedienende Person bzw. der Kommissionierer das Kommissionierflurförderzeug zeitaufwendig genau ausrichten.

Es ist daher bekannt, eine Steuerung vorzusehen, die das Kommissionierflurförderzeug automatisch in einem Regalgang führt, indem es sich an der Umgebung orientiert. Hierfür werden beispielsweise Laserscanner eingesetzt, mit denen die Kontur der Seite des Ganges erkannt wird, an der entlang mit konstantem Abstand das Flurförderzeugs fährt und das somit das Regal als Führungslinie benutzt.

Nachteilig an diesem Stand der Technik ist, dass bei einer fehlenden klaren Kontur das Kommissionierflurförderzeug bei der selbstständigen Fahrt von einer beabsichtigten Fahrbahn abkommen kann und einzelnen Gegenständen oder Objekten im Lagerbereich folgen kann, die keine Kontur bilden.

Dabei ist es auch bekannt, das Flurförderzeug entweder von einem rechten Regal oder einem linken Regal bzw. deren Kontur als Führungslinie in einer Regalreihe führen zu lassen. Dabei fährt der Kommissionierer das Flurförderzeug in die Regalreihe und wählt eine der beiden Seiten aus.

Dabei kann es jedoch vorkommen, dass der Kommissionierer eine ungünstige Seite als Führungslinie bzw. Orientierungsseite auswählt, die eventuell keine geschlossene Kontur bildet, so dass das Flurförderzeug, wie zuvor dargestellt, aus einer Fahrbahn abkommen kann und unbeabsichtigt einzelnen Gegenständen oder Objekten im Lagerbereich folgen kann.

Der vorliegenden Erfindung liegt die Aufgabe zugrunde, ein Verfahren zur Steuerung eines Kommissionierflurförderzeugs zur Verfügung zu stellen, das die zuvor genannten Nachteile vermeidet und mit dem eine automatische Fahrt während des Kommissionierens durchgeführt werden kann.

Diese Aufgabe wird durch ein Verfahren mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung eines Flurförderzeugs, insbesondere zur Kommissionierung, wobei das Flurförderzeug zur Überwachung der Umgebung einen Sensor aufweist, der mit einer Steuerungsvorrichtung verbunden ist, und die Steuerungsvorrichtung nach einem Startbefehl das Flurförderzeug automatisch ohne Signal eines durch eine Person betätigten Fahrsignalgebers fährt, durch Auswertung der Daten des Sensors einen Überwachungsbereich erfasst, in den Daten mindestens eine Regalkante bestimmt und das Flurförderzeug in konstantem Abstand zu einer Regalkante als Führungslinie an dieser entlang fährt, die Steuerungsvorrichtung beidseitig einer Längsachse des Flurförderzeugs eine Regalkante zu bestimmen sucht und für erkannte Regalkanten eine Auswahlmöglichkeit für eine bedienende Person über eine Eingabevorrichtung anbietet, wobei die erkannte Regalkante ausgewählt werden kann, oder im Fall von beidseitig erkannten Regalkante eine von diesen allein oder beide ausgewählt werden können, um diese als Führungslinien zu nutzen.

Vorteilhaft ergibt sich eine deutliche Komfortsteigerung, da das Flurförderzeug selbstständig die möglichen Optionen zur Führung im automatisierten Fahrbetrieb überwacht und dem Bediener nur diejenigen zur Auswahl anbietet, die auch umgesetzt werden können. Wenn nur eine der Regalkanten zur Verfügung steht, wird nur diese angeboten. Im Fall dass beide erfasst werden, kann eine Auswahl zwischen beiden oder eine gemeinsame Nutzung beider Regalkanten erfolgt. Eine versehentliche oder mutwillige Fehlbedienung, beispielsweise durch den Versuch, einen automatisierten Fahrbetrieb orientiert an zur Führung des Flurförderzeug ungeeigneten Objekten durchzuführen, wird verhindert. Die Auswertung der Daten des Sensors und insbesondere die Erfassung der Umgebung durch die Steuerungsvorrichtung erfolgt dabei mithilfe der im Stand der Technik bekannten Methoden und Algorithmen der digitalen Bildverarbeitung. So können beispielsweise mithilfe einer Konturenerkennung typische Elemente eines Regals, wie senkrechte Regalstützen, Paletten sowie eingelagerte Waren erkannt werden und es kann aus diesen Elementen eine vordere Regalkante bestimmt werden.

Vorteilhaft wird eine Auswahlmöglichkeit für eine Fahrt in der Mitte einer Regalgasse zwischen zwei Regalkanten mit einer Orientierung an beiden Regalkanten als Führungslinien von der Steuerungsvorrichtung angeboten.

Die Regalkante kann aus einer ebenerdigen Anordnung von Waren in einem Blocklager besteht.

Unter dem Begriff Regalkante soll in diesem Zusammenhang ganz allgemein auch eine rein ebenerdige, ausgerichtete Anordnung von Waren ohne Regale verstanden werden, wie etwa beispielsweise in einem Blocklager.

In einer weiteren Ausgestaltung stoppt, sobald die Steuerungsvorrichtung die gewählte Regalkante nicht mehr erfassen und keine Führungslinie mehr aus dieser bilden kann, das Flurförderzeug und wird das Verfahren erneut durchgeführt.

Wenn es während des automatischen Fahrbetriebs des Flurförderzeugs zu einer relevanten Veränderung der Umgebung kommt oder nicht plausible Zustände erfasst werden, insbesondere dahingehend, dass durch die Methoden der Bildverarbeitung oder sonstigen Auswertung der Daten keine Regalkante mehr auf der ausgewählten Seite in der Fortsetzung erkannt werden kann, so wird das Flurförderzeug angehalten. Der Bediener bzw. Kommissionierer kann hierüber eine Meldung erhalten. Vorteilhaft wird danach das Verfahren von vorne begonnen und versucht, auf einer Seite bzw. auf beiden Seiten des Flurförderzeugs erneut eine Regalkante zu erfassen. Wenn beispielsweise das Flurförderzeug mit einer Orientierung zu einer Seite hin und der Regalkante auf dieser Seite als Führungslinie im automatischen Fahrbetrieb war, ist es möglich, dass der automatisierte Betrieb mit der anderen Seite als Orientierungsseite und Führungslinie fortgesetzt werden könnte. Vorteilhaft überwacht sich dadurch das Flurförderzeug während des automatischen Fahrbetriebs selbst und es kann zu keinem ungewollten bzw. kritischen Verhalten des Systems kommen.

Vorteilhaft können durch die Steuerungsvorrichtung für eine bedienende Person durch eine Anzeigevorrichtung, insbesondere ein Fahrzeugterminal, ein Display auf einer Fernbedienung und/oder eine Leuchtmarkierung, erkannte Regalkanten dargestellt werden.

Dabei kann beispielsweise eine Leuchtmarkierung dadurch erfolgen, dass durch einen Leuchtspot die erkannten Regalkanten angeleuchtet werden.

Die Eingabevorrichtung kann eine Fernbedienung sein.

Der Sensor kann ein optischer Sensor sein, insbesondere ein Laserscanner, eine 3D-Kamera oder eine Stereokamera.

Weitere Vorteile und Einzelheiten der Erfindung werden anhand des in den schematischen Figuren dargestellten Ausführungsbeispiels näher erläutert. Hierbei zeigt
- Fig. 1: schematisch ein Kommissionierflurförderzeug an einer Regalkante mit einer linken Führungslinie,
- Fig. 2: schematisch das Kommissionierflurförderzeug an einer Regalkante mit einer rechten Führungslinie und
- Fig. 3: schematisch das Kommissionierflurförderzeug in einer Regalgasse mit beidseitigen Führungslinien.

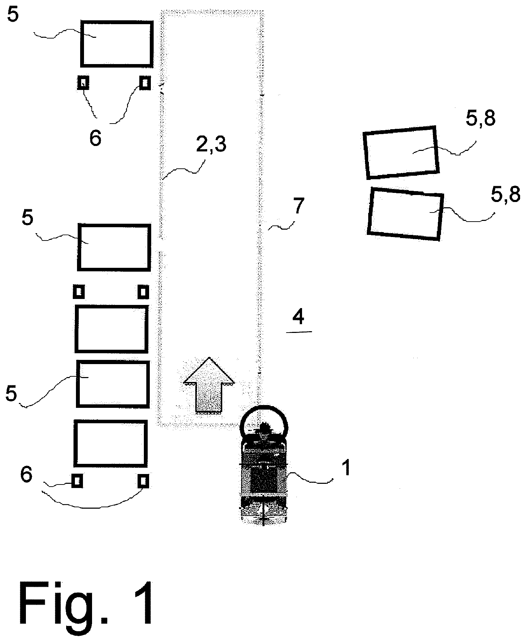

Die Fig. 1 zeigt schematisch ein zum Kommissionieren ausgebildetes Flurförderzeug 1 an einer linken Regalkante 2 mit einer linken Führungslinie 3. Durch einen Sensor, beispielsweise einen optischen Sensor, erfasst das Flurförderzeug 1 einen Überwachungsbereich 4 und eine Steuerungsvorrichtung erfasst in den Daten die linke Regalkante 2, indem Objekte wie Paletten 5 und Regalstützen 6 sowie deren Anordnung erkannt werden. Im Gegensatz hierzu wird auf der rechten Seite des Flurförderzeugs 1, auf der sich allein zwei einzelne Paletten 8 befinden, keine Struktur erfasst, die einer Regalkante 2 entspricht. In dem vorliegenden Beispiel hat die Steuerungsvorrichtung links einer Längsachse 7 des Flurförderzeug 1 die Regalkante 2 als linke Regalkante 2 erkannt und einer bedienenden Personen über eine Eingabevorrichtung zur Auswahl bzw. Bestätigung angeboten. Nach der Auswahl fährt das Flurförderzeug 1 im automatischen Fahrbetrieb entlang der linken Regalkante 2 als Führungslinie 3.

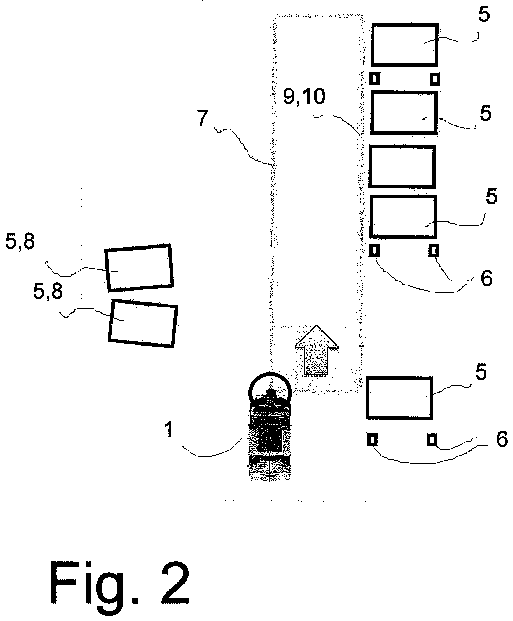

Die Fig. 2 zeigt schematisch das Kommissionierflurförderzeug an einer rechten Regalkante 9 mit einer rechten Führungslinie 10. Auch hier hat die Steuerungsvorrichtung aus den Daten des optischen Sensors des Flurförderzeugs 1 durch die Paletten 5 und Regalstützen 6 allein auf der rechten Seite von der Längsachse 7 die rechte Regalkante 9 erfasst und allein die rechte Regalkante 9 als mögliche Option für eine Führungslinie 10 der bedienenden Person durch eine Auswahlmöglichkeit angeboten. Nach Bestätigung der rechten Regalkante 9 durch die bedienende Person als rechte Führungslinie 10 fährt das Flurförderzeug 1 im automatischen Betrieb entlang der rechten Führungslinie 10 im festen Abstand. Wie bereits in der vorherigen Fig. 1 sind zwei einzelne Paletten 8 nicht ausreichend, um eine durchgehende Kontur einer Regalkante zu erfassen.

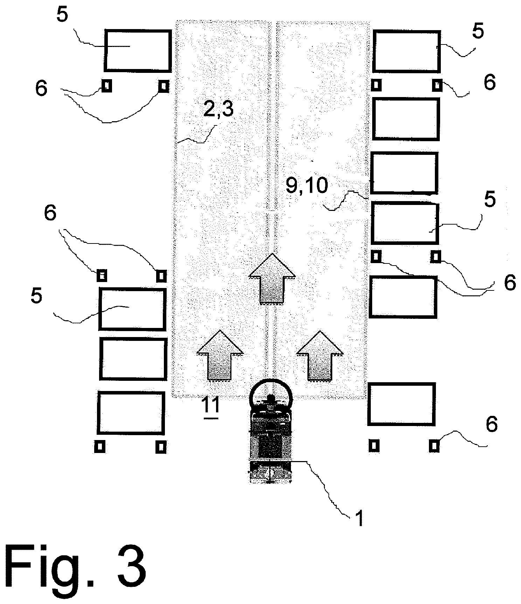

Die Fig. 3 zeigt schematisch das Flurförderzeug 1 in einer Regalgasse 11 mit beidseitigen Führungslinien 3,10. Dies entspricht der dritten Möglichkeit, bei der die Steuerungsvorrichtung des Flurförderzeugs 1 sowohl eine linke Regalkante 2, wie auch eine rechte Regalkante 9 durch die Paletten 5 sowie Regalstützen 6 erkennt. Beide Optionen werden der bedienenden Person als Möglichkeiten für Führungslinien 3,10 angeboten. In dem vorliegenden Beispielsfall hat die bedienende Person einen Fahrweg in der Mitte der durch die Regalkanten 2,9 gebildeten Regalgasse 11 gewählt, bei der eine Führung des Flurförderzeug 1 an beiden Führungslinien 3,10 erfolgt.

## Patentansprüche

1. Verfahren zur Steuerung eines Flurförderzeugs(1), insbesondere eines Flurförderzeugs (1) zur Kommissionierung, wobei das Flurförderzeug (1) zur Überwachung der Umgebung einen Sensor aufweist, der mit einer Steuerungsvorrichtung verbunden ist, und die Steuerungsvorrichtung nach einem Startbefehl das Flurförderzeug (1) automatisch ohne Signal eines durch eine Person betätigten Fahrsignalgebers fährt, durch Auswertung der Daten des Sensors einen Überwachungsbereich (4) erfasst, in den Daten mindestens eine Regalkante (2,9) bestimmt und das Flurförderzeug (1) in konstantem Abstand zu einer Regalkante (2,9) als Führungslinie (3,10) an dieser entlang fährt, wobei die Steuerungsvorrichtung beidseitig einer Längsachse (7) des Flurförderzeugs (1) eine Regalkante (2,9) zu bestimmen sucht,
**dadurch gekennzeichnet,**
**dass** die Steuerungsvorrichtung für erkannte Regalkanten (2,9) eine Auswahlmöglichkeit für eine bedienende Person über eine Eingabevorrichtung anbietet, wobei die erkannte Regalkante (2,9) ausgewählt werden kann, oder im Fall von beidseitig erkannten Regalkanten (2,9) eine von diesen allein oder beide ausgewählt werden können, um diese als Führungslinien (3,10) zu nutzen.

2. Verfahren nach Anspruch 1,
**dadurch gekennzeichnet,**
**dass** eine Auswahlmöglichkeit für eine Fahrt in der Mitte einer Regalgasse (11) zwischen zwei Regalkanten (2,9) mit einer Orientierung an beiden Regalkanten (2,9) als Führungslinien (3,10) von der Steuerungsvorrichtung angeboten wird.

3. Verfahren nach Anspruch 1 oder 2,
**dadurch gekennzeichnet,**
**dass** die Regalkante (2,9) aus einer ebenerdigen Anordnung von Waren in einem Blocklager besteht.

4. Verfahren nach einem der Ansprüche 1 bis 3,
**dadurch gekennzeichnet,**
**dass**, sobald die Steuerungsvorrichtung die gewählte Regalkante (2,9) nicht mehr erfassen und keine Führungslinie (3,10) mehr aus dieser bilden kann, das Flurförderzeug (1) stoppt und das Verfahren erneut durchführt.

5. Verfahren nach einem der Ansprüche 1 bis 4,
**dadurch gekennzeichnet,**
**dass** durch die Steuerungsvorrichtung für eine bedienende Person durch eine Anzeigevorrichtung , insbesondere ein Fahrzeugterminal, ein Display auf einer Fernbedienung und/oder eine Leuchtmarkierung, erkannte Regalkanten (2,9) dargestellt werden.

6. Verfahren nach einem der Ansprüche 1 bis 5,
**dadurch gekennzeichnet,**
**dass** die Eingabevorrichtung eine Fernbedienung ist.

7. Verfahren nach einem der Ansprüche 1 bis 6,
**dadurch gekennzeichnet,**
**dass** der Sensor ein optischer Sensor ist, insbesondere ein Laserscanner, eine 3D-Kamera oder eine Stereokamera.

## Claims

1. Method for controlling an industrial truck (1), in particular a picking vehicle (1), wherein the industrial truck (1) has, for monitoring the surroundings, a sensor which is connected to a control device, and after a starting command the control device automatically moves the industrial truck (1) without a signal from a driving signal transmitter which is activated by a person, senses a monitoring range (4) by evaluating the data of the sensor, determines at least one shelf rack edge (2, 9) in the data, and moves the industrial truck (1) at a constant distance from a shelf rack edge (2, 9), along the latter as a guide line (3, 10), wherein the control device attempts to determine a shelf rack edge (2, 9) on both sides of a longitudinal axis (7) of the industrial truck (1),
**characterized**
**in that** the control device provides, for detected shelf rack edges (2, 9), a selection possibility for an operating person by means of an input device, wherein the detected shelf rack edge (2, 9) can be selected, or in the case of shelf rack edges (2, 9) which are detected on both sides one of these alone or both can be selected, in order to use them as guide lines (3, 10).

2. Method according to Claim 1,
**characterized**
**in that** a selection possibility for travel in the centre of a shelf rack aisle (11) between two shelf rack edges (2, 9) is offered by the control device with orientation to both shelf rack edges (2, 9) as guide lines (3, 10).

3. Method according to Claim 1 or 2,
**characterized**
**in that** the shelf rack edge (2, 9) is composed of a ground-level arrangement of goods in a block warehouse.

4. Method according to one of Claims 1 to 3,
**characterized**
**in that** as soon as the control device can no longer sense the selected shelf rack edge (2, 9) and can no longer form a guide line (3, 10) therefrom, it stops the industrial truck (1) and carries out the method anew.

5. Method according to one of Claims 1 to 4,
**characterized**
**in that** shelf rack edges (2, 9) which are detected are displayed to an operating person by the control device, by a display device, in particular a vehicle terminal, a display on a remote control apparatus and/or a luminous marker.

6. Method according to one of Claims 1 to 5,
**characterized**
**in that** the input device is a remote control apparatus.

7. Method according to one of Claims 1 to 6,
**characterized**
**in that** the sensor is an optical sensor, in particular a laser scanner, a 3D camera or a stereo camera.

## Revendications

1. Procédé de commande d'un chariot de manutention (1), en particulier d'un chariot de manutention (1) destiné à la préparation de commandes, dans lequel le chariot de manutention (1) comporte un capteur relié à un dispositif de commande pour la surveillance de l'environnement et le dispositif de commande pilote automatiquement le chariot de manutention (1) sans signal provenant d'un générateur de signaux de commande actionné par une personne après un ordre de démarrage, détecte une zone de surveillance (4) en évaluant les données du capteur, détermine au moins un bord de rayonnage (2, 9) dans les données, et pilote le chariot de manutention (1) à une distance constante d'un bord de rayonnage (2, 9) en tant que ligne de guidage (3, 10), dans lequel le dispositif de commande cherche à déterminer un bord de rayonnage (2, 9) des deux côtés d'un axe longitudinal (7) du chariot de manutention (1),
**caractérisé en ce que** le dispositif de commande propose à un opérateur une possibilité de sélection de bords de rayonnage (2, 9) détectés par l'intermédiaire d'un dispositif d'entrée, dans lequel le bord de rayonnage (2, 9) détecté peut être sélectionné ou, dans le cas de bords de rayonnage détectés des deux côtés (2, 9), l'un d'entre eux peut être sélectionné seul ou les deux peuvent être sélectionnés pour une utilisation en tant que lignes de guidage (3, 10).

2. Procédé selon la revendication 1,
**caractérisé en ce qu'**une possibilité de sélection pour un déplacement au milieu d'une allée de rayonnage (11) entre deux bords de rayonnage (2, 9) avec une orientation vers les deux bords de rayonnage (2, 9) est proposée par le dispositif de commande en tant que lignes de guidage (3, 10).

3. Procédé selon la revendication 1 ou 2,
**caractérisé en ce que** le bord de rayonnage (2, 9) est constitué d'une disposition au niveau du sol de marchandises dans un espace de stockage en blocs.

4. Procédé selon l'une quelconque des revendications 1 à 3,
**caractérisé en ce que**, dès que le dispositif de commande n'est plus en mesure de détecter le bord de rayonnage (2, 9) sélectionné et ne peut plus créer de ligne de guidage (3, 10) à partir de ceux-ci, le chariot de manutention (1) s'arrête et exécute à nouveau le procédé.

5. Procédé selon l'une quelconque des revendications 1 à 4,
**caractérisé en ce que** des bords de rayonnages (2, 9) détectés par le dispositif de commande sont représentés pour un opérateur par un dispositif d'affichage, en particulier un terminal de véhicule, un afficheur sur une télécommande et/ou un marquage lumineux.

6. Procédé pour l'une quelconque des revendications 1 à 5,
**caractérisé en ce que** le dispositif d'entrée est une télécommande.

7. Procédé selon l'une quelconque des revendications 1 à 6,
**caractérisé en ce que** le capteur est un capteur optique, en particulier un scanner laser, une caméra 3D ou une caméra stéréoscopique.
